# EUROPEAN PATENT APPLICATION

(11) **EP 4 414 210 A1**
(43) Date of publication of application: **14.08.2024**
(21) Application number: 23182442.6
(22) Date of filing: 29.06.2023
(51) Int. Cl.: B60L 58/12, B60L 58/27

(54) **VEHICLE BATTERY PREHEATING METHOD, VEHICLE AND READABLE STORAGE MEDIUM**

(30) Priority: 13.02.2023 CN 202310151637
(71) Applicant: Xiaomi EV Technology Co., Ltd., 100176 Beijing (CN)
(72) Inventor: SONG, Deru, Beijing, 100176 (CN); XIE, Jiali, Beijing, 100176 (CN); LI, Hongfei, Beijing, 100176 (CN)
(74) Representative: dompatent von Kreisler Selting Werner - Partnerschaft von Patent- und Rechtsanwälten mbB

(57) **Abstract**

A vehicle battery preheating method, the method includes: determining (S 1 1) a target charging pile for charging a battery of a vehicle; estimating (S12), in a process of the vehicle traveling to the target charging pile, a remaining electric quantity for a time of the vehicle traveling to the target charging pile; determining (S13) a target temperature of the battery according to charging power of the target charging pile and the remaining electric quantity; determining (S14) a current first target heating rate of the battery, and determining a current estimated heating duration of the battery from a current temperature to the target temperature according to the current first target heating rate; and heating (S15) the battery according to the current estimated heating duration and a traveling duration of the vehicle traveling to the target charging pile.

## Description

### TECHNICAL FIELD

The disclosure relates to the technical field of vehicles, in particular to a vehicle battery preheating method, a vehicle and a readable storage medium.

### BACKGROUND

A new energy vehicle, such as an electric vehicle, is a current trend in the development of the vehicle industry. Because a lithium cell used in the electric vehicle has a severe low-temperature limiting property, for example, the activity of positive and negative electrode materials and conductivity of electrolyte will decrease below 0°C, leading to a decrease in performance of the lithium cell, a decrease in a capacity of the lithium battery, and a decrease in charging power. For example, the chemical characteristics of the lithium cell cause the electric vehicle to be charged very slowly in a low-temperature environment, resulting in long waiting time for a user to charge in a cold environment, severe charging anxiety, and poor charging experience.

### SUMMARY

In order to solve the problem existing in the related art, the disclosure provides a vehicle battery preheating method, a vehicle and a readable storage medium.

According to a first aspect of the disclosure, a vehicle battery preheating method is provided, including:
determining a target charging pile for charging a battery of a vehicle;
estimating, in a process of the vehicle traveling to the target charging pile, a remaining electric quantity for a time of the vehicle traveling to the target charging pile;
determining a target temperature of the battery according to charging power of the target charging pile and the remaining electric quantity;
determining a current first target heating rate of the battery, and determining a current estimated heating duration of the battery from a current temperature to the target temperature according to the current first target heating rate; and
heating the battery according to the current estimated heating duration and a traveling duration of the vehicle traveling to the target charging pile.

Optionally, the heating the battery according to the current estimated heating duration and the traveling duration of the vehicle traveling to the target charging pile includes:
obtaining a target heating power of the battery by adjusting a current heating power of the battery according to the current estimated heating duration and the traveling duration of the vehicle traveling to the target charging pile; and
heating the battery according to the target heating power.

Optionally, the obtaining the target heating power of the battery by adjusting the current heating power of the battery according to the current estimated heating duration and the traveling duration of the vehicle traveling to the target charging pile includes:
obtaining the target heating power of the battery by increasing the current heating power of the battery in a case where the current estimated heating duration is greater than the traveling duration of the vehicle traveling to the target charging pile.

Optionally, the obtaining the target heating power of the battery by adjusting the current heating power of the battery according to the current estimated heating duration and the traveling duration of the vehicle traveling to the target charging pile includes:
obtaining the target heating power of the battery by decreasing the current heating power of the battery in a case where the current estimated heating duration is less than the traveling duration of the vehicle traveling to the target charging pile; and
determining the current heating power of the battery as the target heating power in a case where the current estimated heating duration is equal to the traveling duration of the vehicle traveling to the target charging pile.

Optionally, the obtaining the target heating power of the battery by adjusting the current heating power of the battery according to the current estimated heating duration and the traveling duration of the vehicle traveling to the target charging pile further includes:
determining, in a case where the current estimated heating duration is greater than or less than the traveling duration of the vehicle traveling to the target charging pile, a second target heating rate of the battery according to the traveling duration, the target temperature, and the current temperature of the battery; and
determining the target heating power of the battery according to the second target heating rate.

Optionally, the determining the current first target heating rate of the battery includes:
determining a current maximum heating power of the battery; and
determining a heating rate corresponding to the current maximum heating power according to a corresponding preset relationship between heating power and a heating rate, and determining the heating rate corresponding to the current maximum heating power as the current first target heating rate of the battery.

Optionally, the determining the current first target heating rate of the battery includes:
determining an average heating rate of the battery within a preset duration onward from a current moment; and
determining the average heating rate as the current first target heating rate of the battery.

Optionally, the determining the target temperature of the battery according to the charging power of the target charging pile and the remaining electric quantity includes:
determining an optimal charging battery temperature corresponding to the charging power of the target charging pile and the remaining electric quantity according to a corresponding preset relationship between charging power, the remaining electric quantity and a battery temperature, and determining the optimal charging battery temperature as the target temperature of the battery.

Optionally, the determining the target charging pile for charging the battery of the vehicle includes:
determining, in a case where an endpoint position input by a user is a charging pile position, whether the vehicle is able to travel to the charging pile position according to a current electric quantity of the vehicle; and
determining, in a case where it is determined that the vehicle is able to travel to the charging pile position, a charging pile corresponding to the charging pile position as the target charging pile.

Optionally, the determining the target charging pile for charging the battery of the vehicle further includes:
determining, in a case where it is determined that the vehicle is unable to travel to the target charging pile position, or that the endpoint position input by the user is not the target charging pile position and the vehicle is unable to travel to the endpoint position, a charging pile located on a path planned based on a current position and the endpoint position, and estimating a remaining electric quantity for a time of the vehicle traveling to each charging pile; and
determining a charging pile with the remaining electric quantity greater than a preset threshold as a midway energy-replenishing charging pile for the vehicle; and
determining a midway energy-replenishing charging pile closest to the current position of the vehicle as the target charging pile.

Optionally, the method further includes:
displaying at least one of the following information, including: identification of each midway energy-replenishing charging pile, an estimated remaining electric quantity for a time of the vehicle traveling to each midway energy-replenishing charging pile, a time of the vehicle traveling to each midway energy-replenishing charging pile, a distance between the vehicle and each midway energy-replenishing charging pile, and a charging duration of each midway energy-replenishing charging pile, where charging duration refers to a duration of charging an electric quantity of the battery from the remaining electric quantity for a time traveling to the midway energy-replenishing charging pile to a preset electric quantity.

Optionally, the method further includes:
terminating heating the battery in a case where the vehicle meets the following preset condition,
the preset condition including any one or more of the following conditions: the vehicle travels to the target charging pile, the battery of the vehicle is heated to the target temperature, and the estimated remaining electric quantity for a time of the vehicle traveling to the target charging pile is not greater than a preset threshold.

According to a further aspect of an example, a vehicle battery preheating apparatus is provided, including:
a first determining module, configured to determine a target charging pile for charging a battery of a vehicle;
an estimating module, configured to estimate, in a process of the vehicle traveling to the target charging pile, a remaining electric quantity for a time of the vehicle traveling to the target charging pile;
a second determining module, configured to determine a target temperature of the battery according to charging power of the target charging pile and the remaining electric quantity;
a third determining module, configured to determine a current first target heating rate of the battery, and determine a current estimated heating duration of the battery from a current temperature to the target temperature according to the current first target heating rate; and
a heating module, configured to heat the battery according to the current estimated heating duration and a traveling duration of the vehicle traveling to the target charging pile.

According to a second aspect of the disclosure, a vehicle is provided, including:
a processor; and
a memory for storing executable instructions of the processor; wherein
the processor is configured to:
determine a target charging pile for charging a battery of a vehicle;
estimate, in a process of the vehicle traveling to the target charging pile, a remaining electric quantity for a time of the vehicle traveling to the target charging pile;
determine a target temperature of the battery according to charging power of the target charging pile and the remaining electric quantity;
determine a current first target heating rate of the battery, and determine a current estimated heating duration of the battery from a current temperature to the target temperature according to the current first target heating rate; and
heat the battery according to the current estimated heating duration and a traveling duration of the vehicle traveling to the target charging pile.

Optionally, the processor (651) is further configured to:
obtain a target heating power of the battery by adjusting current heating power of the battery according to the current estimated heating duration and the traveling duration of the vehicle traveling to the target charging pile; and
heat the battery according to the target heating power.

According to a third aspect of the disclosure, a non-transitory computer readable storage medium is provided, storing a computer program instruction. When the program instruction is executed by a processor, the processor implements steps of the vehicle battery preheating method provided by the first aspect of the disclosure.

The technical solution provided by the examples of the disclosure may include the following beneficial effects:
the above technical solution is used to dynamically adjust the current heating power of the battery according to the current estimated heating duration and the traveling duration of the vehicle traveling to the target charging pile, so that the heating duration of the battery is as same as the traveling duration of the vehicle as much as possible, and it is ensured that the battery temperature reaches the target temperature at the time of the vehicle traveling to the target charging pile, thus improving efficiency of heating the battery, improving charging performance, reducing a charging time, and then improving charging performance of the battery.

It is to be understood that the above general description and the following detailed description are for example and explanatory, and cannot limit the disclosure.

### BRIEF DESCRIPTION OF THE DRAWINGS

Accompanying drawings here, which are incorporated in and constitute a part of this specification, illustrate examples consistent with the disclosure and together with the specification, serve to explain the principles of the disclosure.
Fig. 1 is a flow diagram of a vehicle battery preheating method shown according to an example.
Fig. 2 is a schematic diagram of a navigation interface shown according to an example.
Fig. 3 is a schematic diagram of a corresponding relationship between charging power, a remaining electric quantity, and a battery temperature shown according to an example.
Fig. 4 is a schematic interaction diagram of a vehicle battery preheating method shown according to an example.
Fig. 5 is a block diagram of a vehicle battery preheating apparatus shown according to an example.
Fig. 6 is a block diagram of a vehicle shown according to an example.

### DETAILED DESCRIPTION

Examples will be illustrated in detail here, and instances of which are represented in accompanying drawings. When the following description refers to the accompanying drawings, the same number in the different accompanying drawings represents the same or similar elements unless otherwise indicated. The implementations described in the following examples do not represent all implementations consistent with the disclosure. On the contrary, they are examples of an apparatus and method consistent with some aspects of the disclosure as detailed in the appended claims.

It is to be noted that all actions of obtaining a signal, information, or data in the present disclosure are performed under the premise of complying with the corresponding data protection regulations and policies of the local country, and with authorization of the corresponding apparatus owner.

In order to improve charging efficiency of the lithium cell, the lithium cell usually needs to be heated before charging. A usual way to heat a battery is to use a positive temperature coefficient (PTC) thermistor to convert an electrical energy into a thermal energy, heat a liquid medium, such as a mixture of ethylene glycol and water, and transfer, by heated liquid, heat to the battery in a flow process to heat the battery. The PTC thermistor converts the electrical energy of the battery into the thermal energy. For example, heating the battery needs to consume an electric quantity of the battery of a vehicle.

A battery preheating solution in the related technology mostly heats a battery temperature to a target temperature according to currently available maximum heating power of the vehicle. In a case where the vehicle travels too long, a situation of heating to the target temperature in advance and withdrawing from heating is caused, making it impossible to maintain the target temperature to a charging pile. A charging pile (or charging station) converts electricity from the grid into electricity standards that can be used to charge electric vehicles. Alternatively, if a heating time of the vehicle is too long, coupled with self-heating of the battery itself, it can easily cause the battery to overheat, waste electrical energy, and affect an endurance mileage of the vehicle.

In view of this, the disclosure provides a vehicle battery preheating method, a vehicle and a readable storage medium, so as to dynamically adjust heating power of a battery according to an estimated heating duration and a traveling duration, so that the heating duration of the battery is as same as the traveling duration of the vehicle as much as possible. A battery temperature reaches a target temperature at the time of the vehicle traveling to a charging pile, thus improving the efficiency of heating the battery, reducing a charging duration of the battery, and then improving charging performance of the battery.

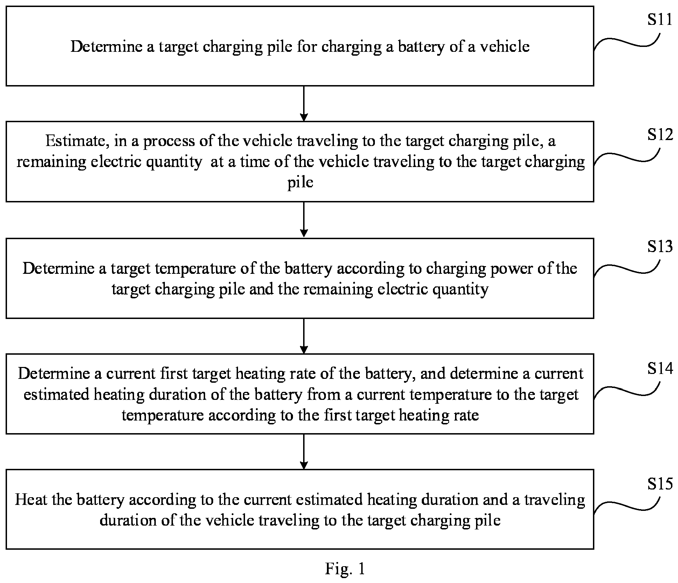

Fig. 1 is a flow diagram of a vehicle battery preheating method shown according to an example. As shown in Fig. 1, the method may include the following steps.

In step S11, a target charging pile for charging a battery of a vehicle is determined.

Firstly, it is to be understood that an electronic device executing the vehicle battery preheating method may be an electronic device with a processing capability, such as a processor and a controller. The electronic device executing this method may be arranged independently with the vehicle or coupled in the vehicle, which is not specifically limited in the disclosure.

Secondly, it is to be understood that according to the disclosure, the vehicle may be controlled to be in a battery preheating mode according to a user operation, or the vehicle may automatically switch to the battery preheating mode. For example, a heating button is arranged in the vehicle. When it is detected that a user triggers the heating button, the vehicle is controlled to be in the battery preheating mode, so as to determine the target charging pile for charging the battery of the vehicle. For another example, when it is detected that a gear position of the vehicle switches to a D gear, the vehicle is controlled to automatically switch to the battery preheating mode, so as to determine the target charging pile for charging the battery of the vehicle.

In one example, a specific implementation of step S11 of determining the target charging pile for charging the battery of the vehicle is: determining, in a case where an endpoint position input by a user is a charging pile position, whether the vehicle is able to travel to the charging pile position according to a current electric quantity of the vehicle; and determining, in a case where it is determined that the vehicle is able to travel to the charging pile position, a charging pile corresponding to the charging pile position as the target charging pile.

In this example, the endpoint position input by the user is the charging pile position. Whether the vehicle is able to travel to the charging pile position is determined according to the current electric quantity of the vehicle. For example, a remaining electric quantity for a time of traveling from a current position to the charging pile position is estimated according to the current electric quantity, a vehicle traveling parameter, and the current accessory power of the vehicle. In a case where the remaining electric quantity is greater than or equal to a preset threshold, it is determined that the vehicle is able to travel to the charging pile position, and then the charging pile corresponding to the charging pile position is determined as the target charging pile. Considering that the battery needs to be heated during vehicle traveling, and in a case where the vehicle is unable to travel to the target charging pile, a navigation system is triggered to arrange a new charging pile. Thus all charging pile parameters and route parameters will change, and the system needs to ensure that the determined target charging pile is a charging pile to which the vehicle can travel. Hence, the preset threshold may be a slightly larger numerical value. Assuming that an arriving remaining electric quantity threshold of triggering the vehicle navigation system to arrange the new charging pile midway to charge the vehicle is 10%, in a case where a calculated remaining electric quantity is less than 10% during vehicle traveling, the vehicle navigation system automatically arranges the new charging pile to replenish energy for the vehicle in advance. This change will affect the calculation of the entire system. To avoid this situation, it needs to ensure that energy additionally consumed in the heating process does not cause the remaining electric quantity to be less than the preset threshold, so the preset threshold may be 12%.

It is to be understood that estimating the remaining electric quantity for a time of traveling from the current position to the charging pile position according to the current electric quantity, the vehicle traveling parameter, and the current accessory power of the vehicle is a relatively mature technology, which is not specifically repeated in the disclosure.

In another example, a specific implementation of step S11 of determining the target charging pile for charging the battery of the vehicle is: determining, in a case where it is determined that the vehicle is unable to travel to the charging pile position, or that the endpoint position input by the user is not the charging pile position and the vehicle is unable to travel to the endpoint position, a charging pile located on a path planned based on the current position and the endpoint position, and estimating a remaining electric quantity for a time of the vehicle traveling to each charging pile; determining a charging pile with the remaining electric quantity greater than the preset threshold as a midway energy-replenishing charging pile for the vehicle; and determining a midway energy-replenishing charging pile closest to the current position of the vehicle as the target charging pile.

In this example, in a case where the estimated remaining electric quantity for a time of traveling from the current position to the charging pile position is less than the preset threshold, such as less than 12%, it is determined that the vehicle is unable to travel to the charging pile position. In the case that the vehicle is unable to travel to the charging pile position, or that the endpoint position input by the user is not the charging pile position and the vehicle is unable to travel to the endpoint position, firstly, the path is planned by taking the current position of the vehicle as a start point and the endpoint position as an end point, so as to obtain the path planned based on the current position and the endpoint position, then all the charging piles located on the path are determined, and the remaining electric quantity at the time of the vehicle traveling to each charging pile is estimated. Afterward, the charging pile with the remaining electric quantity greater than the preset threshold is determined as the midway energy-replenishing charging pile for the vehicle. Finally, the midway energy-replenishing charging pile closest to the current position of the vehicle is determined as the target charging pile.

For example, assuming that the preset threshold may be 12%, and all the charging piles located on the path are a charging pile 1, a charging pile 2 and a charging pile 3 respectively, it is estimated that the remaining electric quantity at the time of the vehicle traveling to the charging pile 1, the charging pile 2 and the charging pile 3 are 74%, 18% and 10% respectively. Thus, the charging pile 1 and the charging pile 2 are determined as the midway energy-replenishing charging pile of the vehicle.

It is to be understood that in a case where the plurality of midway energy-replenishing charging piles is determined, the midway energy-replenishing charging pile closest to the current position of the vehicle is determined as the target charging pile. Moreover, the target charging pile changes during vehicle traveling. For example, in a case where the midway energy-replenishing charging piles located on the path planned based on the current position and the endpoint position are the charging pile 1 and the charging pile 2 in sequence, the target charging pile is the charging pile 1 when the vehicle has not yet reached the charging pile 1, and the target charging pile is the charging pile 2 when the vehicle travels to a road segment between the charging pile 1 and the charging pile 2.

In this example, a display apparatus is arranged in the vehicle. The display apparatus may further display at least one of the following information, including: identification of each midway energy-replenishing charging pile, an estimated remaining electric quantity for a time of the vehicle traveling to each midway energy-replenishing charging pile, a time of the vehicle traveling to each midway energy-replenishing charging pile, and a charging duration of each midway energy-replenishing charging pile, where charging duration refers to a duration of charging an electric quantity of the battery from the remaining electric quantity for a time of the vehicle traveling to the midway energy-replenishing charging pile to a preset electric quantity. For example, the preset electric quantity may be 80%.

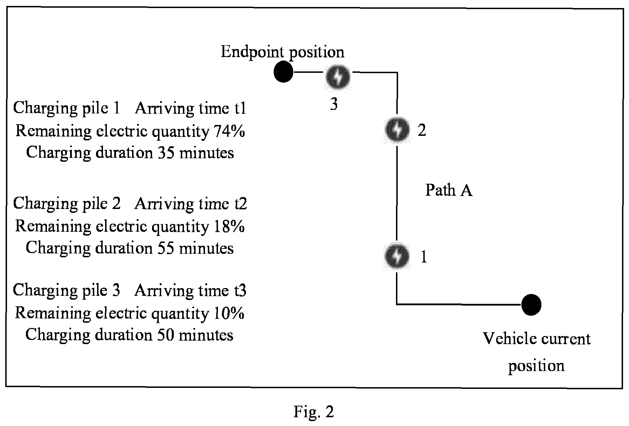

For example, the navigation system of the vehicle is started, a navigation interface is displayed in the display apparatus, and at least one of the above information is displayed in the navigation interface. Fig. 2 is a schematic diagram of a navigation interface shown according to an example. As shown in Fig. 2, the path is planned by taking the current position of the vehicle as the start point and the endpoint position as the end point to obtain the path A, where the midway energy-replenishing charging piles located on the path A are the charging pile 1, the charging pile 2 and the charging pile 3 respectively. The identification of each charging pile, the estimated remaining electric quantity for a time of the vehicle traveling to each midway energy-replenishing charging pile, the time of the vehicle traveling to each midway energy-replenishing charging pile, a distance between the vehicle and each midway energy-replenishing charging pile and the charging duration of each midway energy-replenishing charging pile are displayed on the navigation interface. For example, for the charging pile 1, an arrival time is t1, the remaining electric quantity is 74%, and the charging duration is 35 minutes. For the charging pile 2, an arrival time is t2, the remaining electric quantity is 18%, and the charging duration is 55 minutes. For the charging pile 3, an arrival time is t3, the remaining electric quantity is 10%, and the charging duration is 50 minutes.

Firstly, it is to be understood that in a case where the navigation system of the vehicle is started, a navigation destination is the determined target charging pile for charging the battery of the vehicle. Secondly, it is to be understood that the target charging pile for charging the battery of the vehicle may be either a super charging station or a regular charging pile, which is not specifically limited to the disclosure.

In step 12, in the process of the vehicle traveling to the target charging pile, the remaining electric quantity for a time of the vehicle traveling to the target charging pile is estimated.

For example, the remaining electric quantity at the time of the vehicle traveling to the target charging pile may be estimated according to the current traveling parameters of the vehicle and/or the current accessory power of the vehicle. The current traveling parameters of the vehicle may include parameters such as a vehicle speed, a traveling distance, a driving behavior, a traffic condition, an environmental temperature, and a vehicle current electric quantity. The accessory power is a sum of total thermal management power and direct current conversion power, where the total thermal management power is equal to a sum of vehicle air conditioner heating power and battery heating power. The remaining electric quantity may be represented by a state of charge (SOC).

In addition, a specific mode by which the navigation system of the vehicle estimates the remaining electric quantity at the time of traveling to the target charging pile belongs to a relatively mature technology, which is not specifically limited in the disclosure.

In step S13, a target temperature of the battery is determined according to charging power of the target charging pile and the remaining electric quantity.

The target temperature refers to a temperature that is suitable for the target charging pile to charge the battery. When the temperature of the battery is the target temperature, the target charging pile charges the battery with the maximum charging power it can provide, thus improving charging performance and reducing charging time.

In the disclosure, an optimal charging battery temperature corresponding to the charging power of the target charging pile and the remaining electric quantity may be determined according to a corresponding preset relationship between charging power, the remaining electric quantity and the battery temperature, and the optimal charging battery temperature may be determined as the target temperature of the battery.

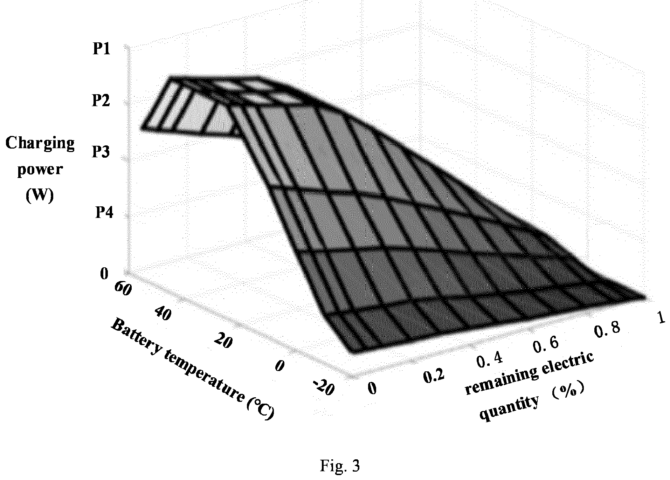

For example, Fig. 3 is a schematic diagram of the corresponding relationship between the charging power, the remaining electric quantity, and the battery temperature shown according to an example. After determining the charging power of the target charging pile and the remaining electric quantity at the time of the vehicle traveling to the target charging pile, the optimal charging battery temperature corresponding to the charging power and the remaining electric quantity is determined according to the corresponding relationship shown in Fig. 3, and the optimal charging battery temperature is determined as the target temperature.

In one example, at the beginning of the vehicle heating process, the remaining electric quantity at the time of the vehicle traveling to the target charging pile is estimated, and the target temperature of the battery is determined according to the charging power of the target charging pile and the remaining electric quantity. Afterward, preheating is performed in the entire heating process according to the target temperature.

Due to the fact that the target temperature is determined according to the charging power of the target charging pile and the estimated remaining electric quantity at the time of the vehicle traveling to the target charging pile, there may be differences in the remaining electric quantity at the time of the vehicle traveling to the target charging pile estimated at different moments in the vehicle traveling process. Thus, there may be differences in the target temperatures determined at different moments. In order to further improve the accuracy of the determined target temperature, improve the charging performance and reduce the charging time, in another example, the target temperature of the battery may be updated according to the charging power of the target charging pile and the remaining electric quantity estimated in real time.

In step S14, a current first target heating rate of the battery is determined, and a current estimated heating duration of the battery from a current temperature to the target temperature is determined according to the current first target heating rate.

In one example, a specific implementation method of determining the current first target heating rate of the battery may include:
current maximum heating power of the battery is determined; and
a heating rate corresponding to the current maximum heating power is determined according to a corresponding preset relationship between heating power and a heating rate, and the heating rate corresponding to the current maximum heating power is determined as the current first target heating rate of the battery.

For example, the current accessory power of the vehicle is equal to the sum of the current total thermal management power and the direct current converter power. For example, the current total thermal management power is equal to the sum of the vehicle air conditioner heating power and the battery heating power. Hence, a difference between the current total thermal management power and the vehicle air conditioner heating power is determined as the current maximum heating power of the battery.

Then, the heating rate corresponding to the current maximum heating power is determined according to the corresponding preset relationship between heating power and the heating rate, and the heating rate is determined as the current first target heating rate. The corresponding relationship between the heating power and the heating rate may be obtained through a low-temperature calibration experiment.

It is to be noted that there is a positive relationship between the heating power and the heating rate. The higher the heating power, the higher the heating rate. The actual heating power of the battery is equal to the heating power allocated by thermal management to the battery plus heat self-generated by the battery minus heat dissipated by the battery to an external environment. Here, through the low-temperature calibration experiment, the corresponding relationship between the heating power and the heating rate under different operating conditions is obtained. As mentioned later, adjusting the heating power of the battery refers to adjusting the PTC heating power. The two parts of self-generated heat and the environmental heat dissipation are uncontrollable, and change with driving conditions and the external environment.

Hence, in the disclosure, the current first target heating rate determined according to the current maximum heating power is also the current maximum heating rate. Correspondingly, the current estimated heating duration obtained from the current first target heating rate determined according to this example is a current minimum estimated heating duration.

In another example, a specific implementation method of determining the current first target heating rate of the battery may include:
an average heating rate of the battery within a preset duration onward from a current moment is determined; and
the average heating rate is determined as the current first target heating rate of the battery.

For example, assuming that the preset duration is 5 minutes, the current moment is time1, and a moment corresponding to 5min onward from the current moment is time2, the average heating rate = (T1-T2)/5, where T1 represents the battery temperature corresponding to the current moment time1, and T2 represents the battery temperature corresponding to the moment time2.

In this example, the current first target heating rate within a preset duration hindward from an initial moment may be determined in the following modes: for each moment within the preset duration hindward from the initial moment, first, the maximum heating power of the battery at this moment is determined, a heating rate corresponding to the maximum heating power at this moment is determined according to the corresponding preset relationship between the heating power and the heating rate, and the heating rate corresponding to the maximum heating power at this moment is determined as a current first target heating rate of the battery at this moment. That is to say, within the preset duration hindward from the initial moment, the current first target heating rate is determined according to the maximum heating power at each moment. Afterward, in the heating process, the average heating rate of the battery within the preset duration onward from the current moment is determined, and the average heating rate is determined as the current first target heating rate of the battery.

After determining the current first target heating rate in any of the above examples, according to the current temperature and the target temperature of the battery, a duration of heating the battery temperature from the current temperature to the target temperature according to the current first target heating rate is determined, and the duration is determined as the current estimated heating duration.

For example, the current estimated heating duration is determined by the following formula t=(T_{target}-T)/heatingrate1, where t represents the current estimated heating duration, T_{target} represents the target temperature of the battery, T represents the current temperature of the battery, and heatingrate1 represents the current first target heating rate.

In step S15, the battery is heated according to the current estimated heating duration and the traveling duration of the vehicle traveling to the target charging pile.

It is to be understood that in order to avoid the battery temperature not reaching the most suitable target temperature for charging at the time of the vehicle traveling to the target charging pile, and to avoid a problem of the battery temperature reaching the target temperature at the time of the vehicle not traveling to the target charging pile, which makes it impossible to maintain the target temperature to the target charging pile, in the disclosure, the battery is heated according to the current estimated heating duration and the traveling duration of the vehicle traveling to the target charging pile, so as to ensure as much as possible that the duration of heating the battery to the target temperature is equal to the duration of the vehicle traveling to the target charging pile. For example, to ensure as much as possible that the temperature of the battery at the time of the vehicle traveling to the target charging pile just reaches the target temperature.

For example, step S15 of heating the battery according to the current estimated heating duration and the traveling duration of the vehicle traveling to the target charging pile may include: target heating power of the battery is obtained by adjusting the current heating power of the battery according to the current estimated heating duration and the traveling duration of the vehicle traveling to the target charging pile; and the battery is heated according to the target heating power.

In an implementation, the target heating power of the battery is obtained by increasing the current heating power of the battery in a case where the current estimated heating duration is greater than the traveling duration of the vehicle traveling to the target charging pile. It is to be understood that the target heating power is not greater than the current maximum heating power of the battery. In a case where the current estimated heating duration is greater than the traveling duration, it represents that the battery temperature at the time of the vehicle traveling to the target charging pile has not yet been heated to the target temperature. For example, the current heating rate and the current heating power are small. At this time, the heating power needs to be increased to obtain the target heating power.

For example, in a case where the current estimated heating duration is greater than the traveling duration and the current heating power of the battery is less than the current maximum heating power of the battery, the target heating power of the battery is obtained by increasing the current heating power of the battery. In a case where the current estimated heating duration is greater than the traveling duration and the current heating power of the battery is equal to the current maximum heating power of the battery, the current maximum heating power of the battery is determined as the target heating power of the battery.

In a case where the current heating power of the battery is already the current maximum heating power, if the current estimated heating duration is still greater than the traveling duration, it represents that when heating the battery according to the maximum heating power, it is still not possible to heat the battery to the target temperature at the time of the vehicle traveling to the target charging pile. At this time, the maximum heating power can be maintained for heating.

In another implementation, the target heating power of the battery is obtained by decreasing the current heating power of the battery in a case where the current estimated heating duration is less than the traveling duration of the vehicle traveling to the target charging pile. It is to be understood that the target heating power is not less than the current minimum heating power of the battery. In a case where the current estimated heating duration is less than the traveling duration, it represents that the battery temperature at the time of the vehicle not traveling to the target charging pile has been heated to the target temperature. For example, the current heating rate and the current heating power are large. At this time, the heating power needs to be decreased to obtain the target heating power. The minimum heating power refers to minimum heating power that a vehicle may consume in the traveling process. For example, the minimum heating power consumed by the vehicle in the traveling process is at a basic operating condition.

For example, in a case where the current estimated heating duration is less than the traveling duration of the vehicle traveling to the target charging pile and the current heating power of the vehicle is greater than the current minimum heating power of the battery, the target heating power of the battery is obtained by decreasing the current heating power of the battery. In a case where the current estimated heating duration is less than the traveling duration of the vehicle traveling to the target charging pile and the current heating power of the battery is equal to the current minimum heating power of the battery, the current minimum heating power of the battery is determined as the target heating power of the battery.

In another implementation, the current heating power of the battery is determined as the target heating power in a case where the current estimated heating duration is equal to the traveling duration of the vehicle traveling to the target charging pile.

In one example, the heating power may be adjusted with a fixed numeric value. For example, in a case where the current estimated heating duration is greater than the traveling duration, a first numeric value is increased on the basis of the current heating power to obtain the target heating power. For another example, in a case where the current estimated heating duration is less than the traveling duration, a second numeric value is decreased on the basis of the current heating power to obtain the target heating power. The first numeric value and the second numeric value are self-defined numeric values.

In this example, although the difference between the estimated heating duration and the traveling duration can be reduced, the battery still cannot be heated to the target temperature at the time of the vehicle traveling to the target charging pile. Hence, in another example, if the current estimated heating duration is greater than or less than the traveling duration at the time of the vehicle traveling to the target charging pile, a second target heating rate of the battery is determined according to the traveling duration, the target temperature, and the current temperature of the battery; and the target heating power of the battery is determined according to the second target heating rate.

For example, the second target heating rate of the battery is determined by the following formula: heatinggrate2=(T_{target}-T)/t_{durarion}. Where, heatinggrate2 represents the second target heating rate, and t_{durarion} represents the traveling duration.

After determining the second target heating rate, heating power corresponding to the second target heating rate is determined according to the corresponding preset relationship between the heating power and the heating rate, and the heating power corresponding to the second target heating rate is determined as the target heating power of the battery.

In this example, the second target heating rate of the battery is determined according to the traveling duration, the target temperature, and the current temperature of the battery, and the target heating power is determined according to the second target heating rate. In this way, when heating the battery according to the target heating power, it can be ensured that the battery is heated to the target temperature at the time of the vehicle traveling to the target charging pile.

After determining the target heating power, the battery is heated according to the target heating power. For example, a heating water temperature and a flow may be determined according to the target heating power, and then the battery is heated according to the heating water temperature and the flow.

In the disclosure, the determined target heating power changes in real time or changes periodically. For example, if the vehicle battery preheating method provided by the disclosure is executed in real time, the target heating power changes in real time. If the vehicle battery preheating method provided by the disclosure is executed periodically, the estimated target heating power changes periodically.

The above technical solution is used to dynamically adjust the current heating power of the battery according to the current estimated heating duration and the traveling duration of the vehicle traveling to the target charging pile, so that the heating duration of the battery is as same as the traveling duration of the vehicle as much as possible, and it is ensured that the battery temperature reaches the target temperature at the time of the vehicle traveling to the target charging pile, thus improving efficiency of heating the battery, improving the charging performance, reducing the charging time, and then improving charging efficiency of the battery.

In addition, heating the battery is terminated in a case where the vehicle meets the following preset condition. The preset condition includes any one or more of the following conditions: the vehicle travels to the target charging pile, the battery of the vehicle is heated to the target temperature, and the estimated remaining electric quantity for a time of the vehicle traveling to the target charging pile is not greater than the preset threshold.

It is to be understood that heating the battery is to convert the electrical energy of the battery into the thermal energy. For example, heating the battery consumes the electric quantity of the battery and then affects an endurance mileage of the vehicle. Hence, when the electric quantity of the battery is low enough to make the vehicle travel to the target charging pile. For example, when the estimated remaining electric quantity for a time of the vehicle traveling to the target charging pile is not greater than the preset threshold, heating the battery may be terminated, to ensure in priority that the vehicle can travel normally to the target charging pile.

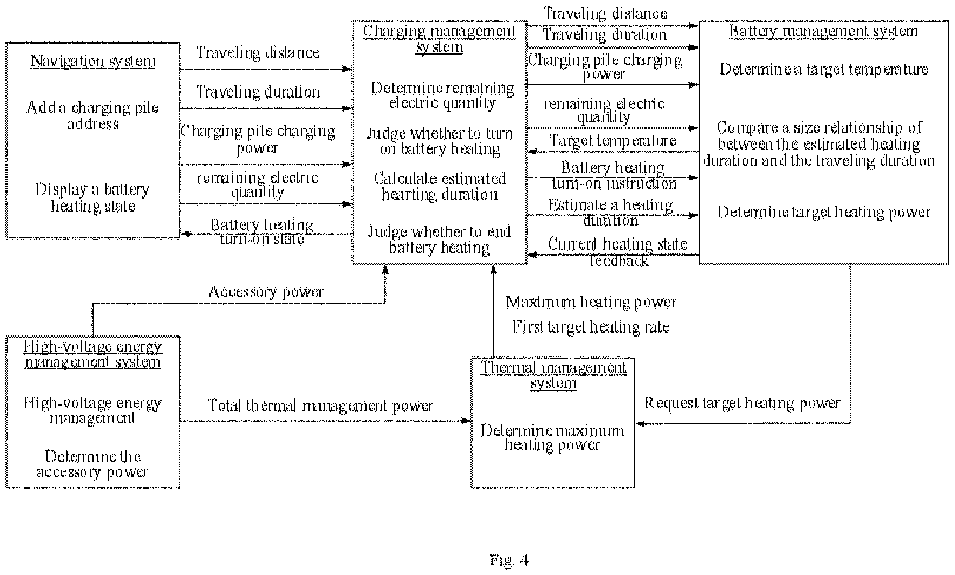

Fig. 4 is a schematic interaction diagram of a vehicle battery preheating method shown according to an example. As shown in Fig. 4, a vehicle includes a navigation system, a charging management system, a battery management system, a high-voltage energy management system, and a thermal management system.

The navigation system is added with a charging pile address, where a charging pile may be a target charging pile or a midway energy-replenishing charging pile. The navigation system sends a traveling distance, traveling duration of the vehicle traveling to a target charging pile address or each midway energy-replenishing charging pile address, and charging power of charging pile to the charging management system. At the same time, the high-voltage energy management system performs high-voltage energy management, determines accessory power, sends accessory power to the charging management system, and sends total thermal management power to the thermal management system.

The charging management system determines a remaining electric quantity at the time of the vehicle traveling to the charging pile according to a current electric quantity, the traveling distance, the traveling duration, and the accessory power of the vehicle, and sends the remaining electric quantity to the navigation system, so that the navigation system displays the remaining electric quantity. The charging management system sends the traveling distance, the traveling duration, the accessory power of the vehicle, and the remaining electric quantity at the time of the vehicle traveling to the charging pile to the battery management system. The battery management system determines a target temperature of the battery based on the above information and sends the target temperature to the charging management system. The charging management system judges whether to turn on battery heating according to the target temperature of the battery and a current temperature of the battery, and sends a battery heating turn-on state to the navigation system when determining to turn on battery heating, so that the navigation system displays a battery heating state on a navigation interface. In addition, the charging management system sends a battery heating turn-on instruction to the battery management system.

The thermal management system determines the maximum heating power of the battery according to total thermal management power and vehicle air conditioner heating power. For example, a difference value between the total thermal management power and the vehicle air conditioner heating power is determined as the maximum heating power of the battery. Then, the thermal management system determines a current first target heating rate according to the maximum heating power and sends the maximum heating power and the current first target heating rate to the charging management system. The charging management system calculates an estimated heating duration according to the current first target heating rate, the current temperature of the battery, and the target temperature, and sends the estimated heating duration to the battery management system. The battery management system judges a relationship of size between the estimated heating duration and the traveling duration, determines the target heating power when the estimated heating duration and the traveling duration are different, and requests the target heating power from the thermal management system, and then the thermal management system heats the battery according to the target heating power. For example, the thermal management system may determine heating battery parameters according to the target heating power, such as a flow parameter and a water temperature parameter.

In addition, the battery management system sends current heating state feedback to the charging management system, and then the charging management system judges whether to terminate the battery heating according to the current heating state feedback. The current heating state feedback may include whether the battery temperature has been heated to the target temperature, whether the vehicle travels to the charging pile, and the estimated remaining electric quantity at the time of the vehicle traveling to the target charging pile is not greater than a preset threshold.

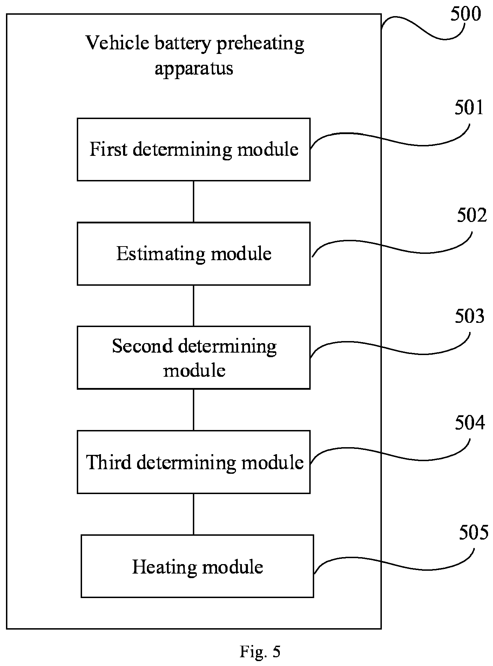

Based on the same inventive concept, the disclosure further provides a vehicle battery preheating apparatus. Fig. 5 is a block diagram of a vehicle battery preheating apparatus shown according to an example. As shown in Fig. 5, the vehicle battery preheating apparatus 500 includes:
a first determining module 501, configured to determine a target charging pile for charging a battery of a vehicle;
an estimating module 502, configured to estimate, in a process of the vehicle traveling to the target charging pile, a remaining electric quantity for a time of the vehicle traveling to the target charging pile;
a second determining module 503, configured to determine a target temperature of the battery according to charging power of the target charging pile and the remaining electric quantity;
a third determining module 504, configured to determine a current first target heating rate of the battery, and determine a current estimated heating duration of the battery from a current temperature to the target temperature according to the current first target heating rate; and
a heating module 505, configured to heat the battery according to the current estimated heating duration and a traveling duration of the vehicle traveling to the target charging pile.

Optionally, the heating module 505 includes:
an adjusting submodule, configured to obtain target heating power of the battery by adjusting current heating power of the battery according to the current estimated heating duration and the traveling duration of the vehicle traveling to the target charging pile; and
a heating submodule, configured to heat the battery according to the target heating power.

Optionally, the adjusting submodule is configured to:
obtain the target heating power of the battery by increasing the current heating power of the battery in a case where the current estimated heating duration is greater than the traveling duration of the vehicle traveling to the target charging pile.

Optionally, the adjusting submodule is configured to:
obtain the target heating power of the battery by decreasing the current heating power of the battery in a case where the current estimated heating duration is less than the traveling duration of the vehicle traveling to the target charging pile; and
determine the current heating power of the battery as the target heating power in a case where the current estimated heating duration is equal to the traveling duration of the vehicle traveling to the target charging pile.

Optionally, the adjusting submodule is configured to:
determine, in a case where the current estimated heating duration is greater than or less than the traveling duration of the vehicle traveling to the target charging pile, a second target heating rate of the battery according to the traveling duration, the target temperature, and the current temperature of the battery; and
determine the target heating power of the battery according to the second target heating rate.

Optionally, the third determining module 504 includes:
a first determining submodule, configured to determine current maximum heating power of the battery; and
a second determining submodule, configured to determine a heating rate corresponding to the current maximum heating power according to a corresponding preset relationship between heating power and a heating rate, and determine the heating rate corresponding to the current maximum heating power as the current first target heating rate of the battery.

Optionally, the third determining module 504 includes:
a third determining submodule, configured to determine an average heating rate of the battery within a preset duration onward from a current moment; and
a fourth determining submodule, configured to determine the average heating rate as the current first target heating rate of the battery.

Optionally, the second determining module 503 is configured to determine an optimal charging battery temperature corresponding to the charging power of the target charging pile and the remaining electric quantity according to a corresponding preset relationship between charging power, the remaining electric quantity and a battery temperature, and determine the optimal charging battery temperature as the target temperature of the battery.

Optionally, the first determining module 501 is configured to determine, in a case where an endpoint position input by a user is a charging pile position, whether the vehicle is able to travel to the charging pile position according to a current electric quantity of the vehicle; and
determine, in a case where it is determined that the vehicle is able to travel to the charging pile position, a charging pile corresponding to the charging pile position as the target charging pile.

Optionally, the first determining module 501 is configured to determine, in a case where it is determined that the vehicle is unable to travel to the charging pile position, or that the endpoint position input by the user is not the charging pile position and the vehicle is unable to travel to the endpoint position, a charging pile located on a path planned based on a current position and the endpoint position, and estimate a remaining electric quantity for a time of the vehicle traveling to each charging pile; and
determine a charging pile with the remaining electric quantity greater than a preset threshold as a midway energy-replenishing charging pile for the vehicle; and
determine a midway energy-replenishing charging pile closest to the current position of the vehicle as the target charging pile.

Optionally, the apparatus further includes:
a displaying module, configured to display at least one of the following information, including: identification of each midway energy-replenishing charging pile, an estimated remaining electric quantity for a time of the vehicle traveling to each midway energy-replenishing charging pile, a time of the vehicle traveling to each midway energy-replenishing charging pile, a distance between the vehicle and each midway energy-replenishing charging pile, and a charging duration of each midway energy-replenishing charging pile, where charging duration refers to a duration of charging an electric quantity of the battery from the remaining electric quantity for a time of the vehicle traveling to the midway energy-replenishing charging pile to a preset electric quantity.

Optionally, the apparatus further includes:
a terminating module, configured to terminate heating the battery in a case where the vehicle meets the following preset condition,
the preset condition including any one or more of the following conditions: the vehicle travels to the target charging pile, the battery of the vehicle is heated to the target temperature, and the estimated remaining electric quantity for a time of the vehicle traveling to the target charging pile is not greater than a preset threshold.

As for the apparatus in the above examples, the specific modes for executing operations by all the modules have been described in the examples related to the method in detail, which is not illustrated in detail here.

The disclosure further provides a computer readable storage medium, storing a computer program instruction. The program instruction, when executed by a processor, implements steps of the vehicle battery preheating method provided by the disclosure.

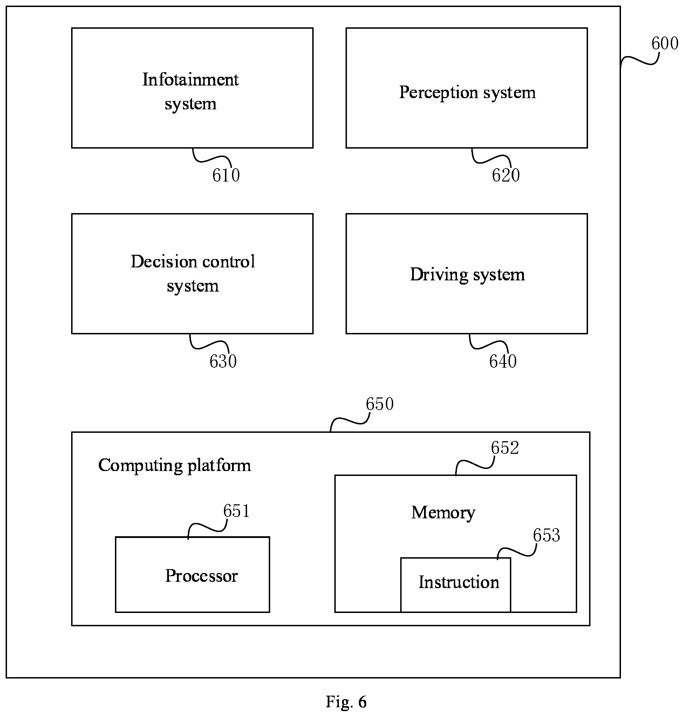

Fig. 6 is a block diagram of a vehicle shown according to an example. For example, a vehicle 600 may be a hybrid vehicle, a non-hybrid vehicle, an electric vehicle, or other types of vehicles. The vehicle 600 may be an automatic driving vehicle, a semi-automatic driving vehicle, or a non-automatic driving vehicle.

Referring to Fig. 6, the vehicle 600 may further include various systems, such as an infotainment system 610, a perception system 620, a decision control system 630, a driving system 640, and a computing platform 650, in addition to the aforementioned navigation system, charging management system, battery management system, high-voltage energy management system, and thermal management system. The vehicle 600 may further include more or fewer subsystems, and each subsystem may include a plurality of parts. In addition, each of the subsystems and each of the parts of the vehicle 600 may be interconnected in a wired or wireless manner.

In some examples, the infotainment system 610 may include a communication system 611, an entertainment system 612, a navigation system 613 and the like.

The perception system 620 may include several types of sensors for sensing information of a surrounding environment of the vehicle 600. For example, the perception system 620 may include a global positioning system (the global positioning system may be a GPS system, a Beidou system or other positioning systems), an inertial measurement unit (IMU), a laser radar, a millimeter wave radar, an ultrasonic radar and a camera shooting apparatus.

The decision control system 630 may include a computing system, a vehicle controller, a steering system, a throttle, and a braking system.

The driving system 640 may include components that provide powered motion for the vehicle 600. In one example, the driving system 640 may include an engine, an energy source, a transmission system, and wheels. The engine may be one or a combination of a plurality of an internal combustion engine, an electric motor, and an air compression engine. The engine can convert energy provided by the energy source into mechanical energy.

Some or all of the functions of the vehicle 600 are controlled by the computing platform 650. The computing platform 650 may include at least one processor 651 and a memory 652, and the processor 651 may execute an instruction 653 stored in the memory 652.

The processor 651 may be any conventional processor, such as a commercially available CPU. The processor may further include, for example, a graphic process unit (GPU), a field programmable gate array (FPGA), a system on a chip (SOC), an application specific integrated chip (ASIC) or their combination.

The memory 652 may be implemented by any type of volatile or nonvolatile storage device or their combinations, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

In addition to the instruction 653, the memory 652 may further store data such as a road map, route information, a vehicle position, direction and speed, and other data. The data stored in the memory 652 may be used by the computing platform 650.

In the example of the disclosure, the processor 651 may execute the instruction 653 to complete all or part of steps of the vehicle battery preheating method above.

In another example, a computer program product is further provided, containing a computer program executable by a programmable apparatus. The computer program has, when executed by the programmable apparatus, a code section for executing the above vehicle battery preheating method.

## Claims

1. A vehicle battery preheating method, comprising:
determining (S11) a target charging pile for charging a battery of a vehicle;
estimating (S12), in a process of the vehicle traveling to the target charging pile, a remaining electric quantity for a time of the vehicle traveling to the target charging pile;
determining (S13) a target temperature of the battery according to charging power of the target charging pile and the remaining electric quantity;
determining (S14 a current first target heating rate of the battery, and determining a current estimated heating duration of the battery from a current temperature to the target temperature according to the current first target heating rate; and
heating (S15) the battery according to the current estimated heating duration and a traveling duration of the vehicle traveling to the target charging pile.

2. The method according to claim 1, wherein heating (S15) the battery according to the current estimated heating duration and the traveling duration of the vehicle traveling to the target charging pile comprises:
obtaining a target heating power of the battery by adjusting a current heating power of the battery according to the current estimated heating duration and the traveling duration of the vehicle traveling to the target charging pile; and
heating the battery according to the target heating power.

3. The method according to claim 2, wherein obtaining the target heating power of the battery by adjusting the current heating power of the battery according to the current estimated heating duration and the traveling duration of the vehicle traveling to the target charging pile comprises:
determining that the current estimated heating duration is greater than the traveling duration of the vehicle traveling to the target charging pile, obtaining the target heating power of the battery by increasing the current heating power of the battery.

4. The method according to claim 2 or 3, wherein obtaining the target heating power of the battery by adjusting the current heating power of the battery according to the current estimated heating duration and the traveling duration of the vehicle traveling to the target charging pile comprises:
determining that the current estimated heating duration is less than the traveling duration of the vehicle traveling to the target charging pile obtaining the target heating power of the battery by decreasing the current heating power of the battery; and
determining that the current estimated heating duration is equal to the traveling duration of the vehicle traveling to the target charging pile, determining the current heating power of the battery as the target heating power.

5. The method according to claim 2, wherein obtaining the target heating power of the battery by adjusting the current heating power of the battery according to the current estimated heating duration and the traveling duration of the vehicle traveling to the target charging pile further comprises:
determining that the current estimated heating duration is greater than or less than the traveling duration of the vehicle traveling to the target charging pile, determining a second target heating rate of the battery according to the traveling duration, the target temperature, and the current temperature of the battery; and
determining the target heating power of the battery according to the second target heating rate.

6. The method according to any one of claims 1-5, wherein determining the current first target heating rate of the battery comprises:
determining current maximum heating power of the battery; and
determining a heating rate corresponding to the current maximum heating power according to a corresponding preset relationship between heating power and a heating rate, and determining the heating rate corresponding to the current maximum heating power as the current first target heating rate of the battery.

7. The method according to any one of claims 1-5, wherein determining the current first target heating rate of the battery comprises:
determining an average heating rate of the battery within a preset duration onward from a current moment; and
determining the average heating rate as the current first target heating rate of the battery.

8. The method according to any one of claims 1-7, wherein determining (S13) the target temperature of the battery according to the charging power of the target charging pile and the remaining electric quantity comprises:
determining an optimal charging battery temperature corresponding to the charging power of the target charging pile and the remaining electric quantity according to a corresponding preset relationship between charging power, the remaining electric quantity and a battery temperature, and determining the optimal charging battery temperature as the target temperature of the battery.

9. The method according to any one of claims 1-8, wherein determining (S11) the target charging pile for charging the battery of the vehicle comprises:
determining that an endpoint position input by a user is a charging pile position, determining whether the vehicle is able to travel to the charging pile position according to a current electric quantity of the vehicle; and
determining that it is determined that the vehicle is able to travel to the charging pile position, determining a charging pile corresponding to the charging pile position as the target charging pile.

10. The method according to claim 9, wherein determining (S11) the target charging pile for charging the battery of the vehicle further comprises:
determining that it is determined that the vehicle is unable to travel to the charging pile position, or that the endpoint position input by the user is not the charging pile position and the vehicle is unable to travel to the endpoint position, determining a charging pile located on a path planned based on a current position and the endpoint position, and estimating a remaining electric quantity for a time of the vehicle traveling to the charging pile; and
determining a charging pile with the remaining electric quantity greater than a preset threshold as a midway energy-replenishing charging pile for the vehicle; and
determining a midway energy-replenishing charging pile closest to the current position of the vehicle as the target charging pile.

11. The method according to claim 10, further comprising:
displaying at least one of:
identification of a midway energy-replenishing charging pile,
an estimated remaining electric quantity for a time of the vehicle traveling to the midway energy-replenishing charging pile,
a time of the vehicle traveling to the midway energy-replenishing charging pile,
a distance between the vehicle and the midway energy-replenishing charging pile, or
a charging duration of the midway energy-replenishing charging pile, wherein the charging duration refers to a duration of charging an electric quantity of the battery from the remaining electric quantity for a time of the vehicle traveling to the midway energy-replenishing charging pile to a preset electric quantity.

12. The method according to any one of claims 1-11, further comprising:
terminating heating the battery determining that the vehicle meets the any one or more of:
the vehicle travels to the target charging pile,
the battery of the vehicle is heated to the target temperature, or
the estimated remaining electric quantity for a time of the vehicle traveling to the target charging pile is not greater than a preset threshold.

13. A vehicle (600), comprising:
a processor (651); and
a memory (652) for storing executable instructions of the processor (651); wherein
the processor (651) is configured to:
determine (S11) a target charging pile for charging a battery of the vehicle;
estimate (S12), in a process of the vehicle traveling to the target charging pile, a remaining electric quantity for a time of the vehicle traveling to the target charging pile;
determine (S13) a target temperature of the battery according to charging power of the target charging pile and the remaining electric quantity;
determine (S14) a current first target heating rate of the battery, and determine a current estimated heating duration of the battery from a current temperature to the target temperature according to the first target heating rate; and
heat (S15) the battery according to the current estimated heating duration and a traveling duration of the vehicle traveling to the current target charging pile.

14. The vehicle according to claiml3, wherein the processor (651) is further configured to:
obtain a target heating power of the battery by adjusting current heating power of the battery according to the current estimated heating duration and the traveling duration of the vehicle traveling to the target charging pile; and
heat the battery according to the target heating power.

15. A non-transitory computer readable storage medium, storing a computer program instruction, wherein in response to determining that the program instruction is executed by a processor, the processor implements steps of the method according to any one of claims 1-12.
